# EUROPEAN PATENT APPLICATION

(11) **EP 4 637 203 A1**
(43) Date of publication of application: **22.10.2025**
(21) Application number: 24170203.4
(22) Date of filing: 15.04.2024
(51) Int. Cl.: H04W 24/02, H04W 84/04, H04W 92/10, H04W 16/26

(54) **RADIO COMMUNICATION NETWORK CONTROLLING COMPONENT AND METHOD FOR CONTROLLING A RADIO COMMUNICATION NETWORK**

(71) Applicant: NTT DOCOMO, INC., Tokyo 100-6150 (JP)
(72) Inventor: KATSALIS, Kostas, 80687 Munich (DE); SAMA, Malla Reddy, 80687 Munich (DE); TRIAY MARQUES, Joan, 80687 Munich (DE); GUERZONI, Riccardo, 80687 Munich (DE); TANAKA, Itsuma, 80687 Munich (DE); ONODA, Takanobu, Tokyo 100-6150 (JP); KUNO, Yuya, Tokyo 100-6150 (JP)
(74) Representative: Viering, Jentschura & Partner mbB Patent- und Rechtsanwälte

(57) **Abstract**

According to one embodiment, a radio communication network controlling component is described comprising a controller configured to determine an association which specifies, for each of one or more of the propagation environment elements of a radio wave propagation environment, which of one or more base stations of a radio communication network uses the propagation environment element to communicate with a mobile terminal by radio wave propagation via the propagation environment element and a receiver configured to receive a message indicating a change of operation of the radio communication network or of the one or more propagation environment elements, wherein the controller is configured to update, in response to reception of the message, the association and trigger that the one or more base stations are instructed to operate according to the updated association.

## Description

The present disclosure relates to radio communication network controlling components and methods for controlling a radio communication network.

A communication system may include propagation environment elements which can interact with one or more of the communication system's radio access network (RAN) and can direct the propagation of radio waves to mobile terminals. For example, towards 6G, programmable metasurfaces are expected to play a key role for extending the RAN capabilities close to mobile terminals. In principle, propagation environment elements may be limited in their capabilities and it may not be possible that the same propagation environment element can support the communication of two or more RAN components (i.e. typically base stations) when these RAN components lead to different requirements for the operation of the propagation environment element. Therefore, efficient approaches to control a radio access network including or operating in an propagation environment including (e.g. controllable) propagation environment elements are desirable.

According to one embodiment, a radio communication network controlling component is provided comprising a controller configured to determine an association which specifies, for each of one or more of the propagation environment elements of a radio wave propagation environment, which the one or more base stations of a radio communication network uses the propagation environment element to communicate with a mobile terminal by radio wave propagation via the propagation environment element and a receiver configured to receive a message indicating a change of operation of the radio communication network or of the one or more propagation environment elements, wherein the controller is configured to update, in response to reception of the message, the association and trigger that the one or more base stations are instructed to operate according to the updated association.

According to a further embodiment, a method for controlling a radio communication network according to the above radio communication network controlling component is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system according to an embodiment.
- Figure 2: illustrates a propagation environment in which two RANs (radio access networks) exchange radio waves with a UE (user equipment).
- Figure 3: illustrates a data flow path between a dissagregated RAN and a UE in case of propagation via a PMU (Programmable Metasurface Unit).
- Figure 4: illustrates a data flow path between a disaggregated RAN and a UE in case of propagation via an NCR (Network Controlled Repeater).
- Figure 5: illustrates a data flow for RAN-PEEs (Propagation Environment Elements) association management.
- Figure 6: illustrates the communication between a RAN and a UE in a multi-hop manner.
- Figure 7: gives a graph representation of multiple paths with multiple hops each between a RAN and a UE via multiple PEEs.
- Figure 8: illustrates the RAN-PEE association management approach described above in an O-RAN (Open RAN) environment.
- Figure 9: shows a flow diagram illustrating a PMU re-configuration in an O-RAN (Open RAN) environment.
- Figure 10: shows a flow diagram illustrating the handling of a PMU failure in an O-RAN (Open RAN) environment.
- Figure 11: shows a radio communication network controlling component according to an embodiment.
- Figure 12: shows a flow diagram illustrating a method for controlling a radio communication network.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a radio communication network controlling component, comprising a controller configured to determine an association which specifies, for each of one or more of the propagation environment elements of a radio wave propagation environment, which of one or more base stations of a radio communication network uses the propagation environment element to communicate with a mobile terminal by radio wave propagation via the propagation environment element and a receiver configured to receive a message indicating a change of operation of the radio communication network or of the one or more propagation environment elements wherein the controller is configured to update, in response to reception of the message, the association and trigger that the one or more base stations are instructed to operate according to the updated association.
Example 2 is the radio communication component according to example 1, wherein the one or more propagation environment elements include at least one controllable propagation environment element and the controller is configured to instruct the at least one controllable propagation environment element to operate according to the updated association.
Example 3 is the radio communication component according to example 1 or 2, wherein the one or more propagation environment elements are active propagation environment elements.
Example 4 is the radio communication component according to any one of examples 1 to 3, wherein the one or more propagation environment elements include one or more network controlled repeaters and/or one or more programmable metasurface units.
Example 5 is the radio communication component according to any one of examples 1 to 4, wherein the change of operation is a change of operation of one of the one or more base stations and/or one of the one or more propagation environment elements, a failure of one of the one or more base stations and/or one of the one or more propagation environment elements and/or a change of load of one of the one or more base stations and/or one of the one or more propagation environment elements.
Example 6 is the radio communication component according to any one of examples 1 to 5, wherein the change of operation is a requested change of operation of one of the one or more base stations and/or one of the one or more propagation environment elements by a an Operations Support Systems and/or Business Support System of a communication system to which the radio communication network controlling component belongs.
Example 7 is the radio communication component according to any one of examples 1 to 6, wherein the change of operation is a change of operation of the one or more base stations and the controller is configured to determine, from the association, which of the one or more propagation environment elements are affected by the change of operation due to them being associated with at least one base station whose operation has changed and update the association taking into account the affected one or more propagation environment elements.
Example 8 is the radio communication component according to any one of examples 1 to 7, being at least partially part of a Service Management and Orchestration component or of a Near-Real-Time-Radio Access Network Intelligent Controller.
Example 10 is the radio communication component according to any one of examples 1 to 9, wherein the controller is configured to update the association taking into account a current configuration of the one or more base stations and/or one or more of the propagation environment elements.
Example 11 is the radio communication component according to any one of examples 1 to 10, wherein the receiver is configured to receive information about a current configuration and/or capabilities of the one or more of the propagation environment elements and wherein the controller is configured to determine the association and/or update the association taking the current configuration and/or capabilities of the one or more of the propagation environment elements into account.
Example 12 is the radio communication component according to any one of examples 1 to 11, wherein instructing the one or more base stations to operate according to the updated association comprises informing the one or more base stations about the updated association.
Example 13 is the radio communication component according to any one of examples 1 to 12, wherein determining the association comprises receiving a specification of the association.
Example 14 is the radio communication component according to any one of examples 1 to 13, wherein the controller is configured to determine the association and/or the controller is configured to update the association according taking an operator policy into account.
Example 15 is the radio communication component according to any one of examples 1 to 14, wherein the association and/or the updated association specifies, for at least some of one or more of the propagation environment elements which propagation environment elements form a radio wave propagation path together.
Example 16 is the radio communication component according to any one of examples 1 to 15, wherein the controller is configured to trigger that an orchestration and management system is notified about the updated association.
Example 17 is a method for controlling a radio communication network, comprising determining an association which specifies, for each of one or more of the propagation environment elements of a radio wave propagation environment, which of one or more base stations of a radio communication network uses the propagation environment element to communicate with a mobile terminal by radio wave propagation via the propagation environment element, receiving a message indicating a change of operation of the radio communication network or of the one or more propagation environment elements, updating, in response to reception of the message , the association and instructing the one or more base stations to operate according to the updated association.

It should be noted that one or more of the features of any of the examples above may be combined with any one of the other examples. In particular, the Examples described in context of the radio communication network controlling component are analogously valid for the method.

According to further embodiments, a computer program and a computer readable medium comprising instructions, which, when executed by a computer, make the computer perform the method of any one of the above Examples are provided.

In the following, various examples will be described in more detail.

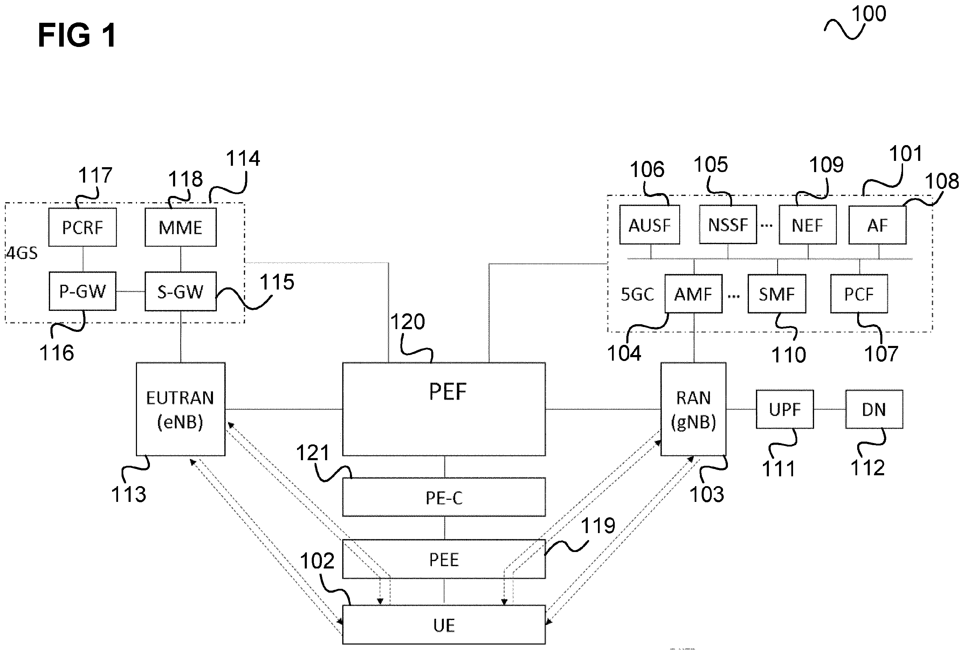

Figure 1 shows a mobile radio communication system 100. In this example, the mobile radio communication system 100 includes a 4G part and a 5G part, but it may comprise either one.

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

In the 5Gpart, the mobile radio communication system 100 includes a 5G Radio Access Network (RAN) 103, which may include a plurality of radio access network nodes, i.e. 5G base stations (gNBs) configured to provide radio access in accordance with a 5G (Fifth Generation) radio access technology (5G New Radio). Each 5G radio access network node may provide a radio communication with the mobile radio terminal device 102 over an air interface. It should be noted that the 5G radio access network 103 may include any number of radio access network nodes.

Further, in the 5G part, the mobile radio communication system 100 includes a 5G core network (5GC) 101 including an Access and Mobility Management Function (AMF) 104 connected to the 5G RAN 103 and a Network Slice Selection Function (NSSF) 105. Typically, there is also a Unified Data Management (UDM, not shown in figure 1) which may further consist of the actual UE's subscription database, which is known as, for example, the UDR (Unified Data Repository). The 5G core network further includes an AUSF (Authentication Server Function) 106, a PCF (Policy Control Function) 107, an AF (application function) 108, a Network Exposure Function (NEF) 109, a Session Management Function (SMF) 110.

Further, the 5G RAN 103 is connected to a data network (DN) 112 via a User Plane Function (UPF) 111. The SMF 110 is for handling PDU (Protocol Data Unit) sessions, i.e. for creating, updating and removing PDU sessions and managing session context with the User Plane Function (UPF) 111.

In the 4G part, the communication system 100 includes a 4G Radio Access Network 113, i.e. an E-UTRAN, which may include a plurality of radio access network nodes, i.e. 4G base stations (eNBs) configured to provide radio access in accordance with a 4G (Fourth Generation) radio access technology, i.e. LTE (Long Term Evolution). Again, it should be noted that each 4G radio access network node may provide a radio communication with the mobile radio terminal device 102 over an air interface and that the 4G radio access network 103 may include any number of 4G radio access network nodes.

Further, in the 4G part, the mobile radio communication system 100 includes a 4G core network (4GS) 114 which includes a Serving Gateway (S-GW) 115, a PDN (Packet Data Network) Gateway (P-GW) 116, a Policy und Charging Rules Function (PCRF) 117 and a Mobility Management Entity (MME) 118.

The 5G RAN 103 and the 5G core network 101 and/or the 4G RAN 113 and the 4G core network 114 form the network side of the mobile radio communication system, or, in other words, form the 5G and/or 4G mobile radio communication network(s). The mobile radio communication network(s) and the mobile terminals accessing the mobile radio communication network(s) form, together, the mobile radio communication system.

The communication between the RANs 103, 113 and the UE 102, i.e. the air interface, is facilitated by the transmission of radio waves in a propagation environment (PE). The propagation environment comprises various PE elements (PEEs) 119, i.e. various objects which affect the propagation of radio waves. These may be cars and buildings etc. but also controllable and/or active PE elements which are deliberately placed to affect the propagation of radio waves, in particular Programmable Metasurface Units (PMUs) and Network Controlled Repeaters (NCR).

According to various embodiments, the communication system 100 further comprises a Propagation Environment Function (PEF) 120 which is able to interact with both the 5G core network 101 and the 5G RAN 103 like also with both the 4G core network 114 and the 4G RAN 113. Each PEE 119 is connected to the PEF 120 by a Propagation Environment Control and Management component (PE-C) 121.

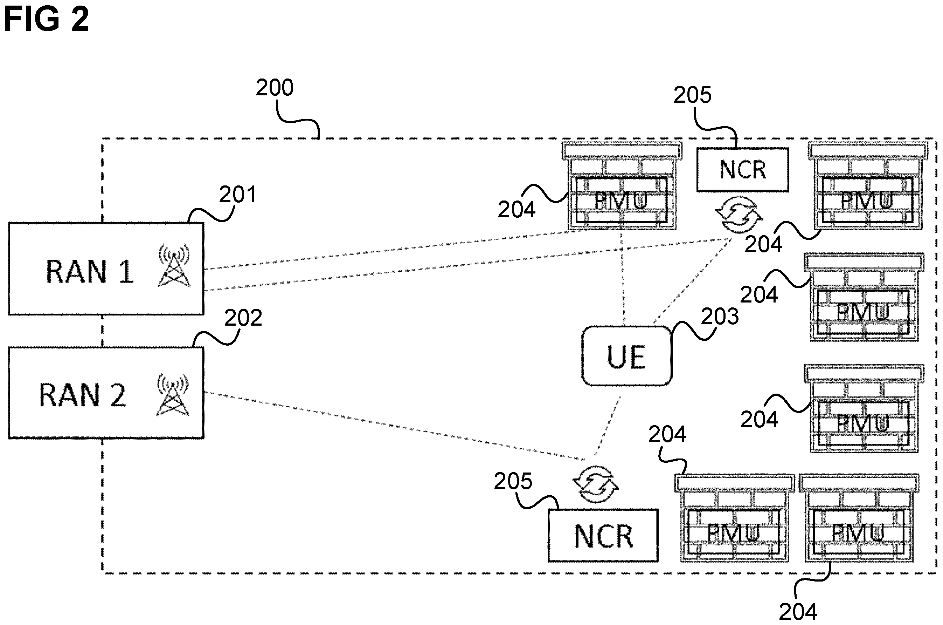

Figure 2 illustrates a propagation environment 200 in which two RANs 201, 202 exchange radio waves with a UE 203 which comprises multiple PMUs 204 and multiple NCRs 205.

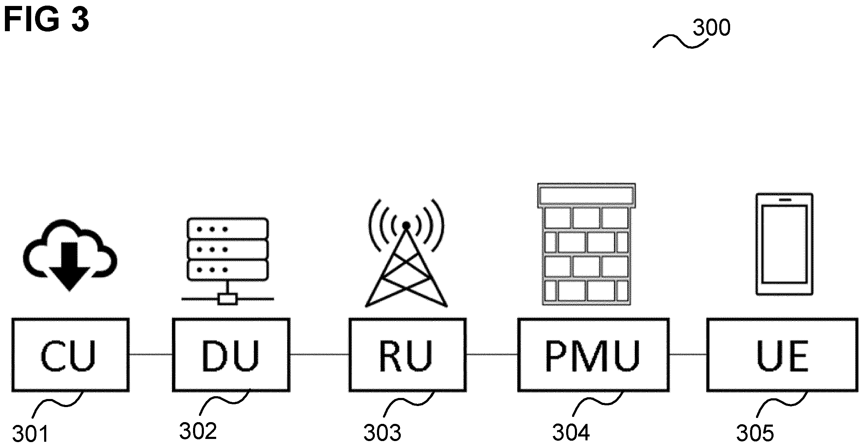

Figure 3 illustrates the data flow path between the disaggregated RAN (here in detail a centralized unit 301, distributed unit 302 and radio unit 303) and UE 305 in case of propagation via a PMU 304 in the PE.

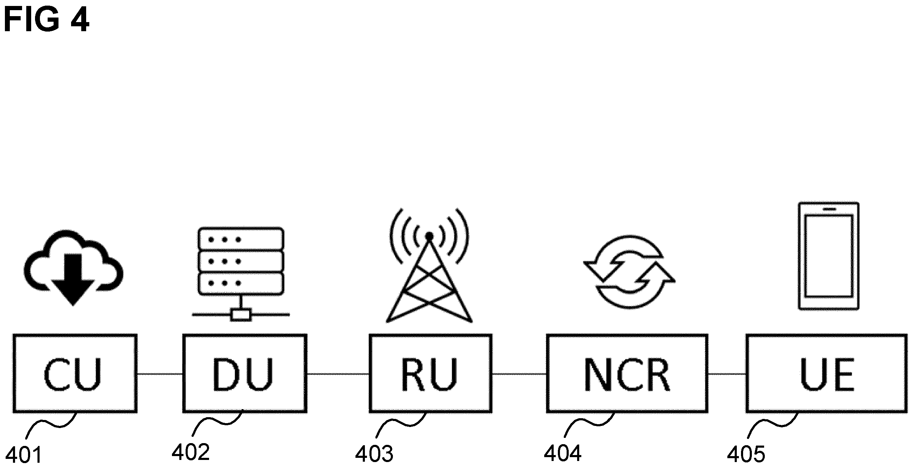

Figure 4 illustrates the data flow path between the disaggregated RAN (here in detail a centralized unit 401, a distributed unit 402 and a radio unit 403) and UE 405 in case of propagation via an NCR 404 in the PE.

When there are one or more PE elements (PEEs) in a propagation environment (PE), the issue arises that the signal sent by a RAN (e.g. a certain base station (e.g. eNB or gNB)) can reach a UE through or not through a certain PEE used for communicating with (sending data to and/or receiving data from) a UE.

For example, a PEE may only receive signals by a limited number (e.g. one) RAN or base station at a time and transmit to a specific UE located in a certain room of a building.

For example, joint optimization of RAN operations with PMU operations may not be feasible in case multiple gNBs/RUs (belonging to the same operator/slice or different operator/slice) are transmitting to the same PMUs residing in the same geographical area (for example, depending on PMU configuration, signal multiplexing in the PMU can lead to completely undesirable signal reception on the UE or even no reception at all if the PMU is tuned to act as a signal absorber).

Accordingly, according to various embodiments, approaches are provided to control which elements of a propagation environment (PE) are used by RAN component (e.g. base station, e.g. a certain eNB or gNB) to transmit to a UE or groups of UEs, e.g. for each of a group of RANs or RAN components.

For this, according to various embodiments, the following are provided in a communication system:
- A first component (referred to as Component A (Comp-A) in the following): it provides Propagation Environment (PE) information (e.g. configuration information, operational status etc.) .
- A second component (referred to as Component B (Comp-B) in the following): it collects information from Comp-A, base station (e.g. gNB) RAN controllers) and other control and management systems (e.g., an OSSBSS (Operations Support SystemBusiness Support System)) and decides about the association between RAN elements (eNBs, gNBs, DU-RUs, etc.) and PEEs (e.g., NCRs, PMUs) by means of which RAN element can interact (i.e. is allowed to interact) with a PEE (denoted in the following referred to as "RAN-PEE " association). Comp-B can be deployed in a central function having global view of the PE and the RAN or as a distributed component installed in every of multiple RAN elements (e.g., base stations (e.g. gNBs)).
- A third component (referred to as Component C (Comp-C)) in the following: it transfers association information to RAN elements (e.g., to base stations (e.g. gNBs) or base station (e.g. gNB) management/control systems). Comp-C can be deployed in a central function having global view of the PE and the RAN or as a distributed component installed in every of multiple RAN elements (e.g., base stations (e.g. gNBs)).

These components allow controlling the usage of PEEs when interacting with one or more RANs efficiently, thus for example enabling efficient RAN operations (e.g. radio signal transmission using beamforming, since omni-directional transmissions may be suboptimal in terms of interference and transmission power management).

Changes in the association (see Comp-B) may be triggered by multiple factors:
- Policy update sent by OSS/BSS,
- Change in the SLA (service level agreement) between the PMU and/or NCR provider and the operator of the communication system (e.g. PLMN operator),
- Heavy load increase in the area of a related radio cell,
- Reception of an intent request (intent-based management request for RAN and/or intent targeting the PMUs ),
- Autonomous decision making based on NWDAF (Network Data Analytics Function) and/or MDA analysis
- RAN element or PE element failure.

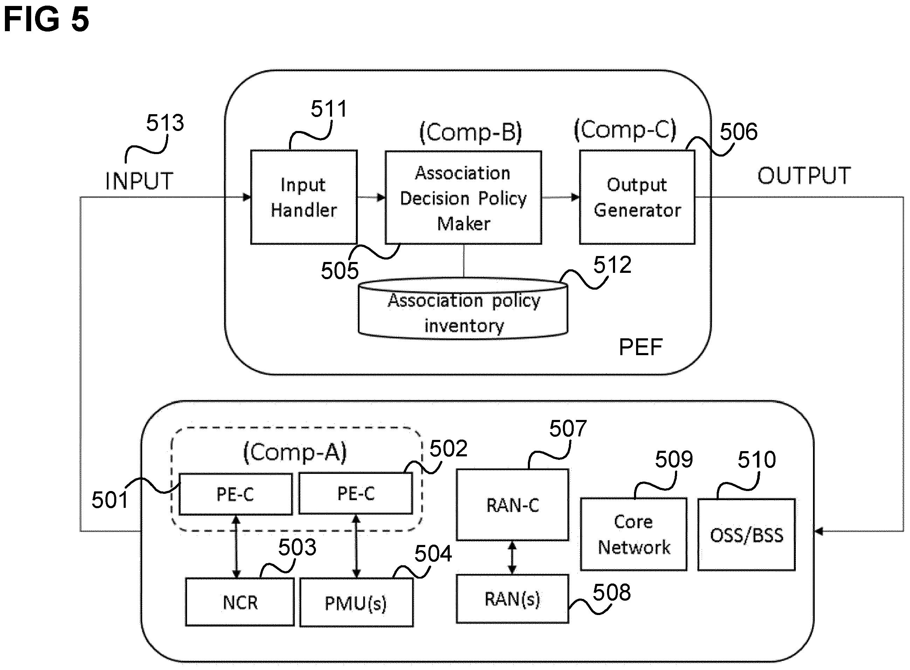

Figure 5 illustrates the data flow for RAN-PE element association management involving the three components mentioned above:
- Comp-A which is in this example implemented by a first PE-C (Propagation Environment Control and Management) component 501 for an NCR 503 and a second PE-C component 502 for a PMU 504 (wherein there may be multiple NCRs and/or multiple PMUs and/or multiple PE-Cs for them implementing Comp-A)
- Comp-B which is in this example implemented by an association decision policy maker 505
- Comp-C which is in this example implemented by an output generator 506.

Comp-A and possibly further components like a RAN-C 507 (RAN control and management entity) coupled to one or more RANs 508, the respective core network 509 and an OSSBSS 510, provide input information 513 (handled by an input handler 511) for Comp-B which, e.g. consulting an association policy inventory 512 determines the RAN-PE element association. The new or updated association is saved in the association policy inventory 512. Comp-C reads from the association policy inventory 512 the new or updated policy and feeds back this information to Comp-A, RAN-C 507, RANs 508, core network 509 and/or OSSBSS 510.

For simplicity interactions between the core network 509 (e.g. 5G Core) and the one or more RANs 508, the RAN-C 507 and OSSBSS 510 (and possibly further components) are not depicted.

It should be noted that Comp-B and Comp-C can be deployed in a central function PEF which has a global view of the PE and the RAN or as a distributed component installed in every of multiple RAN element (e.g. base stations which may use the PE elements whose association with the one or more RANs is managed).

It should further be noted that while most embodiments and examples are described here with respect to 5G, the approaches described herein may also be applied to 4G and next generation networks.

Examples for elements of the input information 513 and their sources are as follows:
- Information from a PE-C 501 regarding an NCR 503. A PE-C can be part of a base station service:
   ∘ NCR capabilities (e.g., beamforming capabilities)
   ∘ NCR operational status (e.g., ON-OFF status, semi-static TDD UL/DL configuration etc.)
   ∘ Topology information (e.g., Decimal degrees (DD) 48.1448968617961, 11.502886385829893)
- Information from a PE-C 502 regarding a PMU 504:
   ∘ PMU capabilities (e.g., virtualization capabilities)
   ∘ PMU operational status (e.g., Frequency Response, Phase Shift, Spatial Distribution etc.)
   ∘ Topology information
- Information from OSS/BSS 510:
   ∘ RAN and/or PE topology information
   ∘ Policies (relevant for the RAN-PE element association). These policies can be updated dynamically by Comp-B.
- Information from core network 509:
   ∘ Information about the number of sessions (e.g. currently established using the involved RAN(s))
   ∘ Security/authorization information
- Information from RAN-C 507:
   ∘ RAN topology
   ∘ RAN capabilities
   ∘ RAN operational status
   ∘ Security/authorization information
   ∘ Handover needs
   ∘ Load balancing needs

Additionally, slice identification information can be considered (i.e. be part of the input information 513): in a slice aware system PE and RAN elements can belong to the same slice and thus are eligible for association.

Based on the collected input information 513 Comp-B decides about the RAN-PE element association (or "PE-RAN element"-mapping) and for example enters for each RAN element (e.g. base station) in a mapping inventory corresponding entries as illustrated in the following.

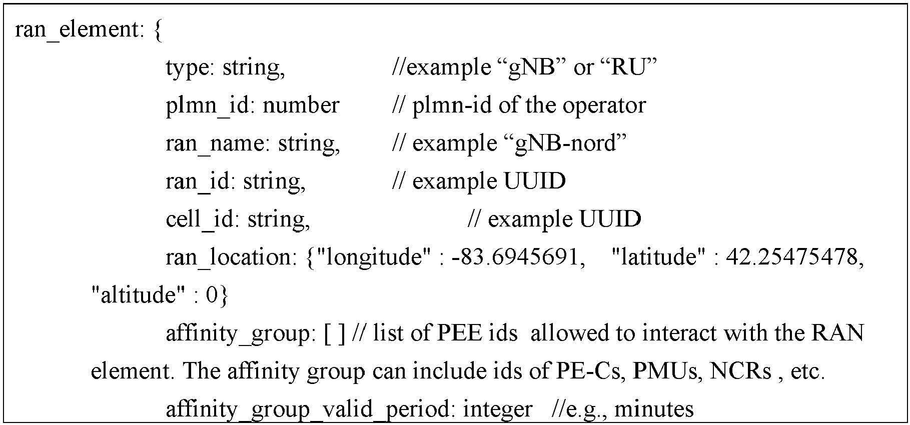

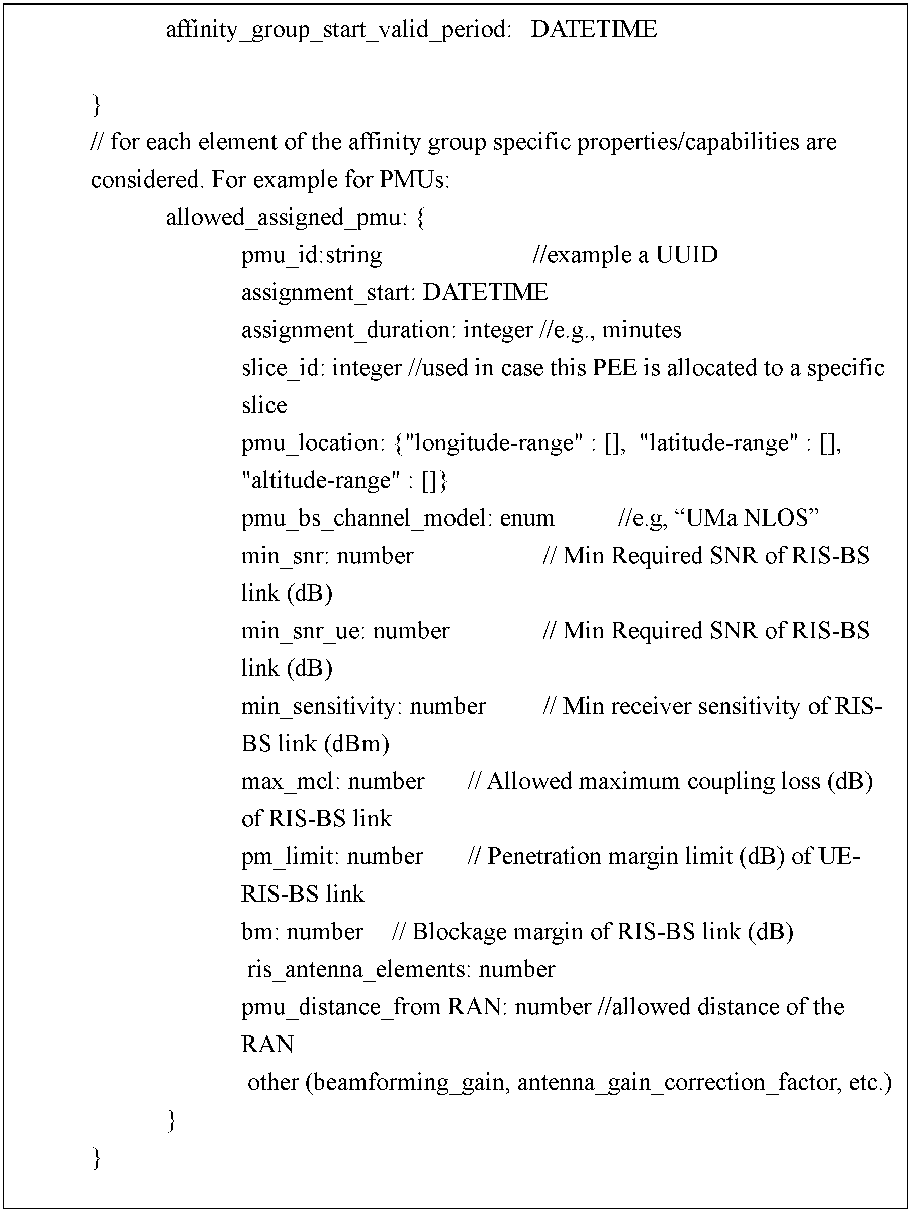

No restriction is imposed on how Comp-B decides the association. For example, Comp-B can exploit artificial intelligence(AI)/machine learning(ML) for determining and/or updating the RAN-PE element association dynamically.

The radio signal transmission between a RAN and a UE may include multiple hops, i.e. the radio signal may be propagated via multiple PEEs. Single hop as well as multi-hop communication may be considered in the management (initial determination and update) of the RAN-PE element association.

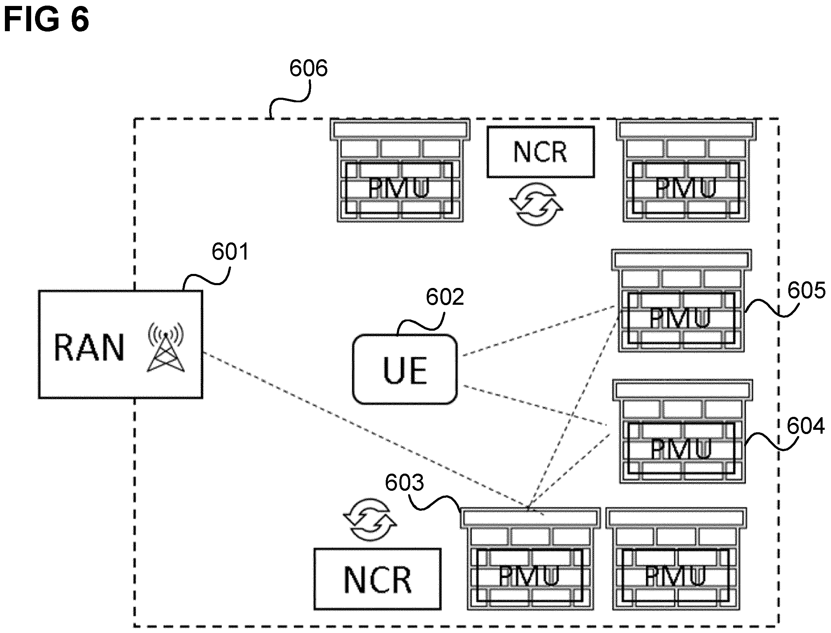

Figure 6 illustrates the communication between a RAN 601 (e.g. a base station) and a UE 602 in a multi-hop (as well as multi-path) manner: a first propagation path is formed via a first PMU 603 and a second PMU 604 and a second propagation path are formed via the first PMU 603 and a third PMU 605 of a propagation environment 606.

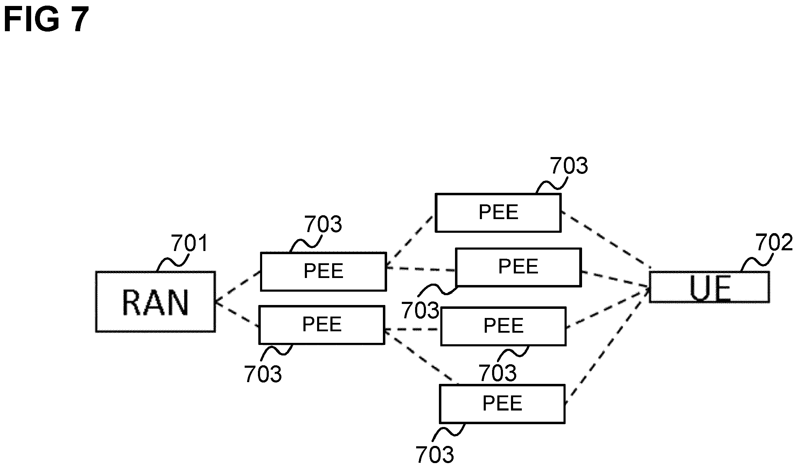

Figure 7 gives a graph representation of multiple paths with multiple hops each between a RAN 701 and a UE 702 via multiple PEEs 703.

In case Comp-B supports multi-hop propagation paths, it decides, in addition to the association of RAN and PE elements, about PEE-PEE association (namely whether they form a hop of a propagation path) and for example enters for each PEE in the mapping inventory also information about the PEE-PEE association as illustrated in the following.

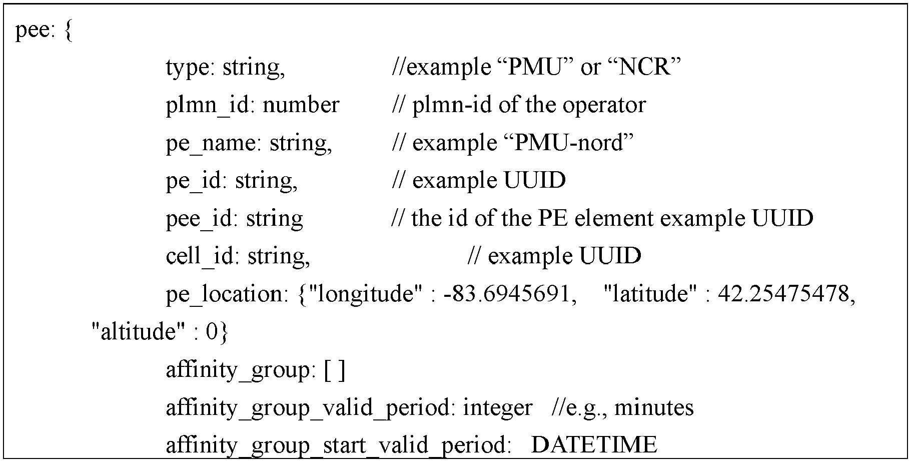

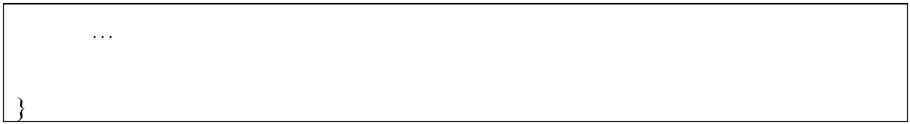

According to various embodiments, Comp-B has one or more of the following functions:
- It is responsible to derive RAN-PE element association/mapping information and PE to PE elements association/mapping information
- It can subscribe/unsubscribe to notifications about newly registered/updated/deregistered PE and PE-C elements (for example NCR and PMU services exposed by PE-Cs)
- It can execute training of AI/ML models for optimal association making
- It supports functionality to enable service consumers to store and retrieve trained AI/ML models related to RAN elements to PEE association and PEE to PEE association
- It supports the collection from external information sources
- It supports functionality to filter information from any possible source, which can be used to assist the association decision making
- It supports various conditions (when determining the RAN-PE element association), such as that
   ∘ PMUs participating in the mapping process can be virtual or physical. Virtual PMUs co-operate on top of physical PMUs and share resources.
   ∘ multi-hop communication over multiple PMUs may be considered.
- It supports RAN-PE element (also denoted as RAN-PEE) association on per slice basis
- It can decide autonomously based on input (including in particular the input information 513) to update the RAN-PE element association
- It can decide to update the mapping based on a request (e.g., from OSSBSS).

After mapping (i.e. determination of RAN-PE element association) is done, information is stored in the association info inventory 512 and interested consumers like the involved RAN(s) 508 and core network 509 are informed about the association by Comp-C by means of corresponding association (or "mapping") information. The involved RAN(s) 508 and/or core network 509 can, based on the association information, optimize the relevant operations in the RAN(s) 508 and/or the core network 509 respectively. For example, a RAN 508 can enable beamforming and steering towards a specific PEE associated to it for communicating with a certain UE. Regarding the core network 509, an SMF can trigger traffic steering to a certain UPF, RAN and/or PE element. For example, if in a geographical area where multiple PMUs operate, extreme load conditions occur for a specific slice the traffic can be re-routed accordingly to specific UPFs/RAN/PMUs.

According to various embodiments, Comp-B has one or more of the following functions:
- It transfers the association information to RAN elements (e.g., to base station (e.g. gNB) or base station (e.g. gNB) management/control systems) and other systems (e.g., O S SB S S, core network)
- It supports subscribers (i.e. subscription (e.g. network) components) to access the association information.
- It supports functionality to authenticate service consumers.

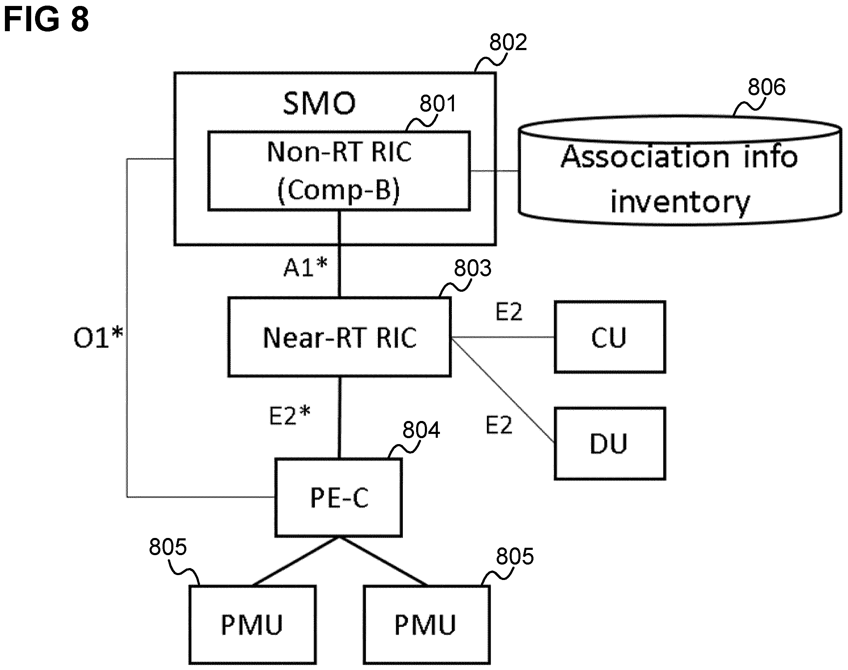

Figure 8 illustrates the RAN-PE element association management approach described above in an O-RAN (Open RAN) environment.

In this embodiment, Comp-B runs inside a Non-RT RIC (RAN intelligent controller) 801 as an internal shared function.

Comp-A is related to the O1 interface (or another dedicated interface) used for PMU/NCR FCAPS (Fault-Management, Configuration, Accounting, Performance and Security).

Comp-C is related to the A1 interface. SMO 802 and Near-RT RIC 803 share the association information decided by Comp-B. Near-RT RIC PE policies are created/updated based on the topology information and PE-RAN and PE-PE association.

E2 interface: PE management and control entities 804 interact with the Near-RT RIC 803 for metrics and real time control.

The A1 interface and E2 interface may be extended accordingly to support the RAN-PE element association management. The O1 interface may also be extended (and/or existing PMU FCAPS mechanisms may be used).

It should be noted that in the official O-RAN architecture PE-Cs and PE are not part of the architecture.

According to O-RAN WG2, the Non-RT RIC 801 can access other SMO framework functionalities, for example influencing what is carried across the O1, open fronthaul M-plane and O2 interface based on PMU status information. Similarly for other PE elements 805 like NCRs. According to one embodiments, the Non-RT RIC framework functionality is extended to register PE-C/PE services along with their service producers (PE-Cs) in the Non-RT RIC and SMO and the Non-RT RIC framework is extended to identify the potentially applicable Near-RT RIC(s) for A1 policy creation if the Near-RT RIC identifier is absent in the create A1 policy request received from an rApp. This identification will also consider registered PE-C/PEs.

Regarding A1 policies for RAN-PE elements associations and PE-PE elements association, according to one embodiment,
- The Non-RT RIC framework function is extended to register PEs and PE-Cs
- Identification of PEs or groups of PEs and PE-Cs or groups of PE-Cs is used in A1 policies. Identification is managed by the Comp-B
- Operational policies including association directives are provided for individual PEs or groups of PEs

As above, RAN elements refer to base stations or base station components like gNBs, eNBs, DUs, RUs, etc. PE examples are NCRs and PMUs which can be physical or virtual.

At least a part of the input information for Comp-B (to determine the RAN-PE element association) may be provided by the A1 interface:
- Comp-B parses policies received by OSSBSS or rApps
- Based on all inputs received Comp-B decides the association between PEs and RAN and possibly (multi-hop case) also between PEEs and writes this information to the Association information inventory.
   ∘ Option 1: Comp-B compiles an A1 policy which conforms to the RAN-PE elements association decision. Comp-C also informs other entities about the association (e.g., core network)
   ∘ Option 2: SMO/Non-RT RIC convey the A1 policy to Near-RT-RIC 803, without association information. Near-RT 803 is able to read information from the association inventory 806 directly to be aware of the association information and updates the policies accordingly.
- Provision of enrichment information is required by Near-RT RIC 803 for PEEs 805.
- An EiTypeId related to PEEs/PE-Cs and association information is introduced used by discovery of enrichment information from NearRT RIC 803.
- The Near-RT RIC 803 can discover available EiTypeIds over the A1 interface and request delivery of A1 enrichment information (i.e. input information 513 transferred via the A1 interface) related to an available EiTypeId for a PE/PE-C or a set of PEEs/PE-C.

PE-C needs to respect the E2 Setup procedure, RIC subscription, etc. PE E2SM service models (topology and capabilities exposure) may be used (e.g. a RIC subscription from the Near-RT RIC 803) at a PE-C 804. For example, in the E2SM (E2 Service Model RAN Control Procedure) PE topology information and associations with RAN elements, PE capabilities exposure, real time PMU/NCR status etc. are considered. Near-RT RIC 803 is for example used for AI/ML tasks for determining the (or providing information for) the RAN-PE element association.

The association information can be used to optimize the radio resource management RRM of the RAN in real time.

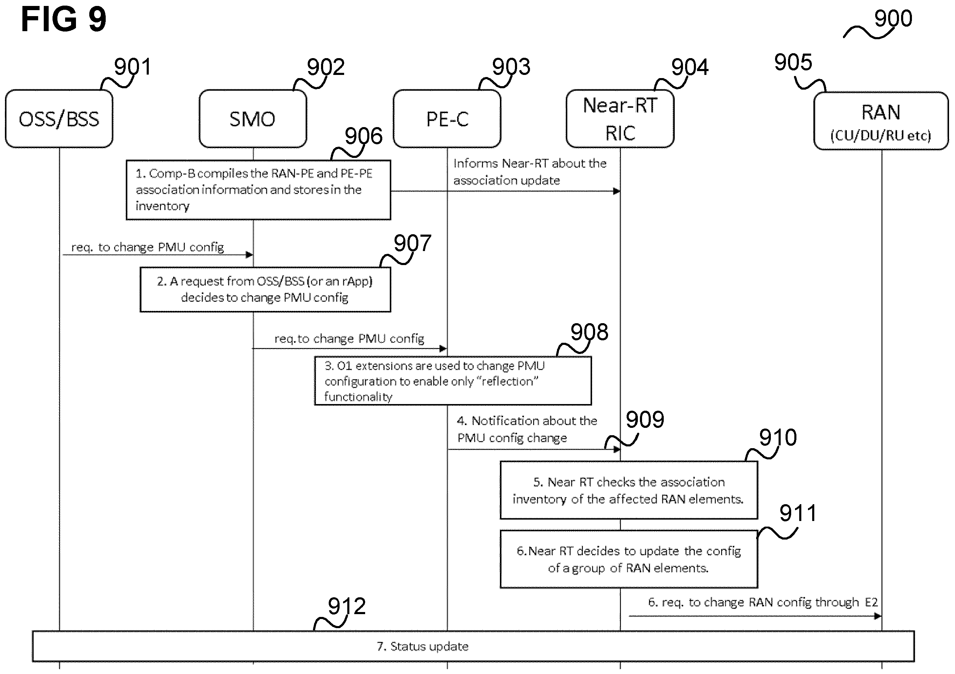

Figure 9 shows a flow diagram 900 illustrating a PMU re-configuration.

An OSSBSS 901, an SMO 902 (implementing Comp-B as described above), a PE-C 903, a Near-RT RIC 904 and a RAN 905 are involved in the flow.

In 906, Comp-B determines the RAN-PE and PE-PE association information, stores it in the association information inventory. An A1 policy is compiled based on this information and/or the Near-RT RIC 904 is aware about the association information (e.g. update of an earlier association).

In 907, the OSS/BSS 901 decides to change the configuration of a PMU to act only as a reflector and sends a corresponding message about the change to the SMO 902 which the SMO 902 forwards it to the PE-C 903.

In 908, O1 extensions are used to convey configuration changes to PE-C to enable "only reflection" functionality.

In 909, the PE-C 903 informs the Near-RT RIC 904 about the change.

In 910, the Near-RT RIC 604 checks the association inventory with respect to the RAN elements affected by the change and, in 911, decides to update the corresponding RAN elements configuration based on association information.

In 911, the Near-RT RIC 604 uses E2 control services to resume or initiate RAN control related call processes, modify RAN configuration and/or E2 service-related UE context information according to the association change.

In 912, communication network components may be informed about the various changes (if relevant for them).

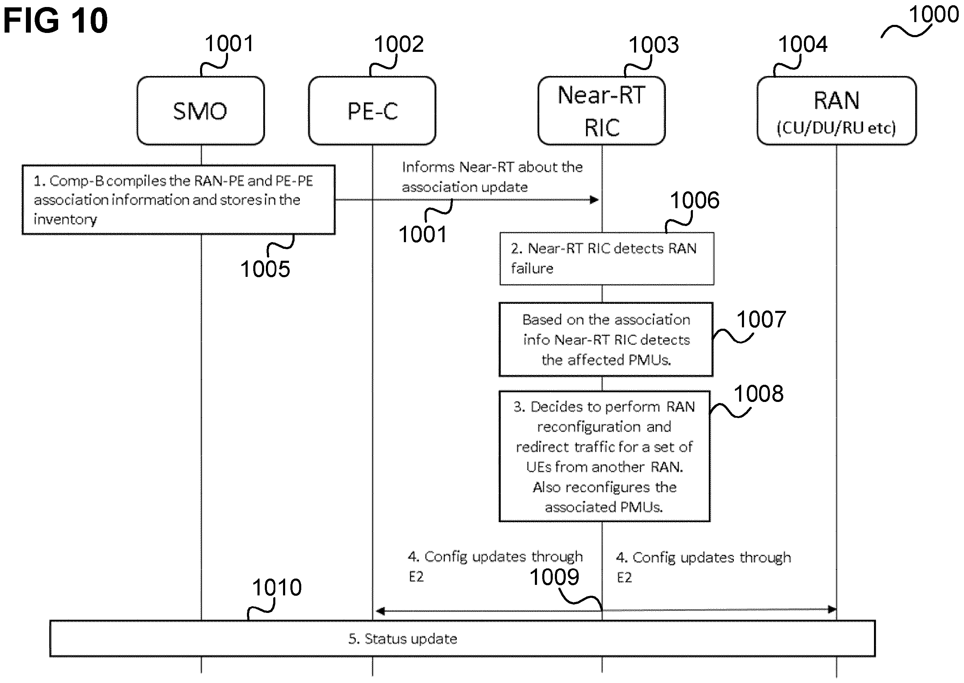

Figure 10 shows a flow diagram 1000 illustrating the handling of a PMU failure.

An SMO 1001 (implementing Comp-B as described above), a PE-C 1002, a Near-RT RIC 1003 and a RAN 1004 are involved in the flow.

In 1005, Comp-B determines the RAN-PE and possibly also PE-PE association information and stores it in the association information inventory and/or informs the Near-RT RIC 1003 about the association information (e.g. update of an earlier association).

In 1006, the Near-RT RIC 1003 detects failure of a RAN element operating a certain radio cell and, based on the association information, in 1007 detects the affected PMUs and/or NCRs (i.e. those for which the association information specifies that they are associated with the failed RAN element).

In 1008, the Near-RT RIC 1003 decides upon a RAN reconfiguration, e.g. to serve UEs close to the area of a failed RAN from another RAN to preserve QoS (quality of service) and to reconfigure corresponding associated PMUs.

In 1009, the Near-RT RIC 1003 uses E2 control services to resume or initiate RAN control related call processes, modify RAN configuration and/or E2 service-related UE context information and redirect traffic to another RAN and, e.g. at the same time, reconfigures the associated PMUs.

In 1010, communication network components may be informed about the various changes (if relevant for them).

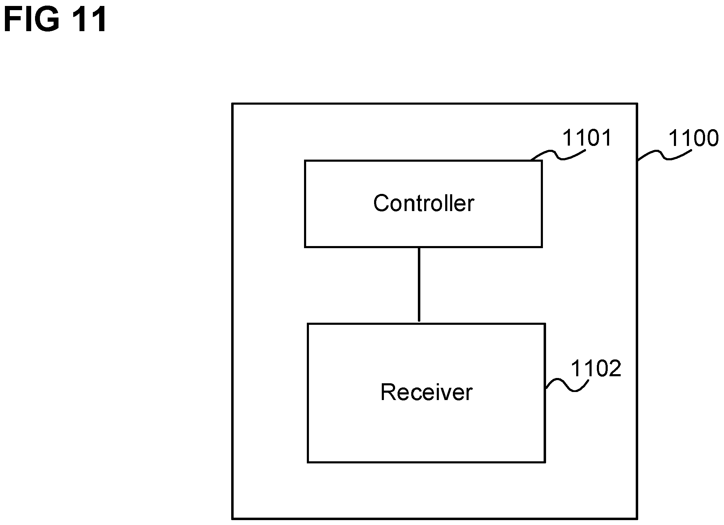

The examples of figures 10 and 11 were described with respect to PMUs but they may analogously applied to other PE elements (in particular NCRs).

For example, there are the following implementation options of Comp-A, Comp-B and Comp-C.

In each option, Comp-A runs in PE-Cs 1104.

Comp-B and/or Comp-C are implemented as part of Propagation Environment Function (PEF)
- PEF can be a standalone 1105 function ,
- PEF can be a core network function
- PEF can be a RAN function (e.g., inside RAN 1107 e.g. base stations (e.g. gNBs, eNBs)) .

A different options may be used for Comp-B than for Comp-C.

In the O-RAN specific case (as described with reference to figure 8), Comp-B may be implemented in
- SMO 802
   ∘ inside Non-RT RIC 803 as an internal shared function
   ∘ in SMO 802 as an rApp
   ∘ as a non-anchored function, i.e. a logical functions in the SMO framework that may or may not be part of the Non-RT RIC framework.
- Near-RT RIC 803
   ∘ inside Near-RT RIC 803 as an internal shared function
   ∘ inside Near-RT RIC 803 as an xApp.

Near-RT RIC 803 can utilize the association information to perform optimized RRM based on AI/ML.

In summary, according to various embodiments, a radio communication network controlling component is provided as illustrated in figure 11.

Figure 11 shows a radio communication network controlling component 1100 according to an embodiment.

The radio communication network controlling component 1100 comprises a controller 1101 configured to determine an association which specifies, for each of one or more of the propagation environment elements of a radio wave propagation environment, which of one or more base stations of a radio communication network uses the propagation environment element to communicate with a mobile terminal by radio wave propagation via the propagation environment element.

The radio communication network controlling component 1100 further comprises a receiver (or input interface) 1102 configured to receive a message indicating a change of operation of the radio communication network (e.g. the one or more base stations) or of the one or more propagation environment elements.

The controller 1001 is configured to update, in response to reception of the message, the association and trigger for example that the one or more base stations are instructed to operate according to the updated association (e.g. instruct the one or more base stations to operate according to the updated association itself or request/command another component (Comp-C in the above examples) to instruct the one or more base stations to operate according to the updated association). The controller 1101 can be seen to correspond to Comp-B in the above examples. Its receiver may for example simply be an input interface, e.g. connected to (or corresponding) to the input handler 511..

According to various embodiments, in other words, RAN elements are associated with PE elements, i.e. RAN elements are mapped to PE elements (or vice versa). This association may be monitored and changed and dynamic RAN and/or PE element reconfiguration may be performed based on real time performance. Orchestrated actions for both the mobile network operations (like management of virtualized network elements etc.) and programmable metasurface elements may be considered by means of topology management (in particular management of the RAN-PE-element association.

The approach of figure 11 may be applied in various uses cases (for example managing metasurfaces in stadiums, shopping malls, etc.) considering joint optimization for RAN and propagation environment operations, by considering dynamic associations. It may be used to enhance telecom operator orchestration mechanisms with new methods/mechanisms and interfaces which can handle metasurfaces as a telecom resource and correlate them with the RAN deployment. It enables advanced orchestration mechanisms and new interactions to jointly optimize RAN and PEE operations. It is not restrictive to one orchestration framework like 3GPP network functions, ETSI NFV-MANO but can be applied to other designs like in O-RAN based solutions. Further, the approach of figure 11 can be operated over multi-technology PEE environments and can be used to cover both the indoor and outdoor deployment scenarios.

The radio communication network controlling component could for example be implemented in a distributed fashion in a plurality of base stations such that each base station decides about the association (related to PEEs and terminals in its service area).

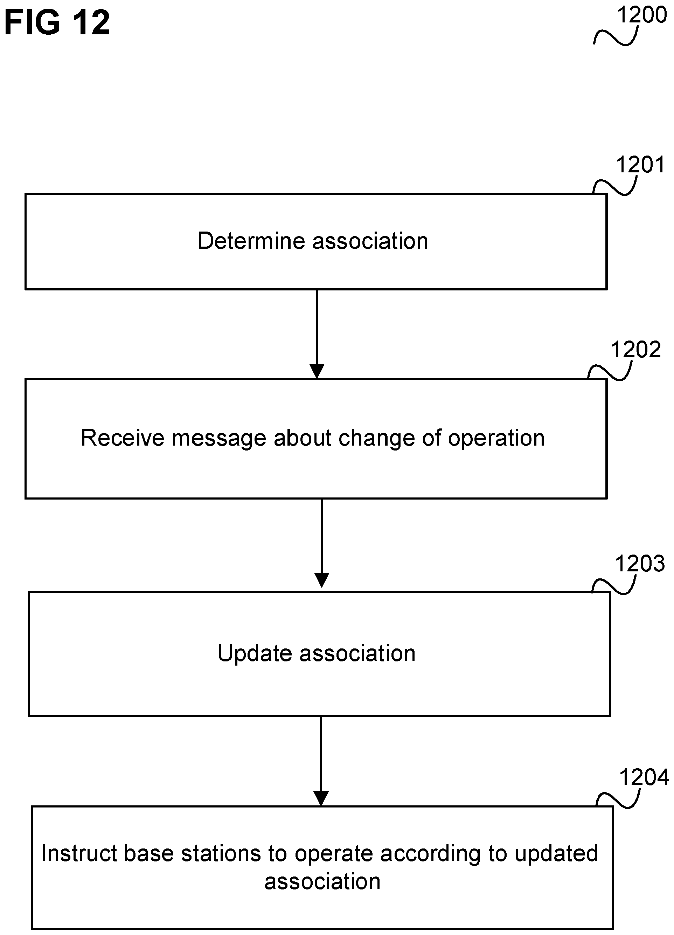

The radio communication network controlling component 1100 for example carries out a method as illustrated in figure 12

Figure 12 shows a flow diagram 1200 illustrating a method for controlling a radio communication network.

In 1201, an (RAN-PE element) association is determined which specifies, for each of one or more of the propagation environment elements of a radio wave propagation environment, which of one or more base stations of a radio communication network uses the propagation environment element to communicate with a mobile terminal by radio wave propagation via the propagation environment element.

In 1202, a message is received indicating a change of operation of the radio communication network (e.g. of the one or more base stations) or of the one or more propagation environment elements.

In 1203, in response to reception of the message, the association is updated.

In 1204, the one or more base stations are instructed to operate according to the updated association.

The radio communication network controlling component (e.g. the controller and the receiver) and other components of the communication system that is contains may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A radio communication network controlling component, comprising:
A controller configured to determine an association which specifies, for each of one or more of the propagation environment elements of a radio wave propagation environment, which of one or more base stations of a radio communication network uses the propagation environment element to communicate with a mobile terminal by radio wave propagation via the propagation environment element;
A receiver configured to receive a message indicating a change of operation of the radio communication network or of the one or more propagation environment elements wherein the controller is configured to update, in response to reception of the message, the association and trigger that the one or more base stations are instructed to operate according to the updated association.

2. The radio communication component according to claim 1, wherein the one or more propagation environment elements include at least one controllable propagation environment element and the controller is configured to instruct the at least one controllable propagation environment element to operate according to the updated association.

3. The radio communication component according to claim 1 or 2, wherein the one or more propagation environment elements are active propagation environment elements.

4. The radio communication component according to any one of claims 1 to 3, wherein the one or more propagation environment elements include one or more network controlled repeaters and/or one or more programmable metasurface units.

5. The radio communication component according to any one of claims 1 to 4, wherein the change of operation is a change of operation of one of the one or more base stations and/or one of the one or more propagation environment elements, a failure of one of the one or more base stations and/or one of the one or more propagation environment elements and/or a change of load of one of the one or more base stations and/or one of the one or more propagation environment elements.

6. The radio communication component according to any one of claims 1 to 5, wherein the change of operation is a requested change of operation of one of the one or more base stations and/or one of the one or more propagation environment elements by a an Operations Support Systems and/or Business Support System of a communication system to which the radio communication network controlling component belongs.

7. The radio communication component according to any one of claims 1 to 6, wherein the change of operation is a change of operation of the one or more base stations and the controller is configured to determine, from the association, which of the one or more propagation environment elements are affected by the change of operation due to them being associated with at least one base station whose operation has changed and update the association taking into account the affected one or more propagation environment elements.

8. The radio communication component according to any one of claims 1 to 7, being at least partially part of a Service Management and Orchestration component or of a Near-Real-Time-Radio Access Network Intelligent Controller.

9. The radio communication component according to any one of claims 1 to 8,
wherein the controller is configured to update the association taking into account a current configuration of the one or more base stations and/or one or more of the propagation environment elements.

10. The radio communication component according to any one of claims 1 to 9,
wherein the receiver is configured to receive information about a current configuration and/or capabilities of the one or more of the propagation environment elements and wherein the controller is configured to determine the association and/or update the association taking the current configuration and/or capabilities of the one or more of the propagation environment elements into account.

11. The radio communication component according to any one of claims 1 to 10, wherein instructing the one or more base stations to operate according to the updated association comprises informing the one or more base stations about the updated association.

12. The radio communication component according to any one of claims 1 to 11,
wherein determining the association comprises receiving a specification of the association.

13. The radio communication component according to any one of claims 1 to 12,
wherein the controller is configured to determine the association and/or the controller is configured to update the association according taking an operator policy into account.

14. A method for controlling a radio communication network, comprising:
determining an association which specifies, for each of one or more of the propagation environment elements of a radio wave propagation environment, which of one or more base stations of a radio communication network uses the propagation environment element to communicate with a mobile terminal by radio wave propagation via the propagation environment element;
receiving a message indicating a change of operation of the radio communication network or of the one or more propagation environment elements;
updating, in response to reception of the message , the association; and
instructing the one or more base stations to operate according to the updated association.
